# EUROPEAN PATENT APPLICATION

(11) **EP 3 611 365 A1**
(43) Date of publication of application: **19.02.2020**
(21) Application number: 19186681.3
(22) Date of filing: 17.07.2019
(51) Int. Cl.: F02K 3/06, F02C 7/36, F16H 1/00, F16D 1/10

(54) **DEVICE FOR COUPLING AN OUTPUT SHAFT WITH AN EPICYCLIC GEARBOX, METHOD FOR COUPLING AN OUTPUT SHAFT WITH AN EPICYCLIC GEARBOX AND A GAS TURBINE ENGINE**

(30) Priority: 15.08.2018 DE 102018119827
(71) Applicant: Rolls-Royce Deutschland Ltd & Co KG, 15827 Blankenfelde-Mahlow (DE)
(72) Inventor: WALKER, Philip Brian, 15827 Blankenfelde-Mahlow (DE)
(74) Representative: Maikowski & Ninnemann Patentanwälte Partnerschaft mbB

(57) **Abstract**

The embodiments relate to devices for coupling, in particular the recoupling an output shaft (41) with an epicyclic gearbox (30) in a gas turbine engine (10), wherein an axial coupling action (C) between the output shaft (41) and the epicyclic gearbox (30) is generatable through an oil pump (50) and transmitted through an oil transfer coupling (53). Embodiments also relate to a method for coupling and a gas turbine engine (10).

## Description

The present disclosure relates to a device for coupling an output shaft with an epicyclic gearbox with the features of claim 1, a method for coupling an output shaft with an epicyclic gearbox with the features of claim 11 and a gas turbine engine with the features of claim 12.

According to a first aspect there is provided a device for coupling, in particular the recoupling an output shaft with an epicyclic gearbox (in particular a planetary gearbox) in a gas turbine engine. Recoupling in this context may imply that the connection between the planetary gearbox and the output shaft has been disconnected e.g. due to some operational problems such as a gearbox seizure and after that the connection is reestablished - recoupled - when the problem is solved or mitigated.

In this aspect an axial coupling action between the output shaft and the epicyclic gearbox is generatable through an oil pump and transmitted through an oil transfer coupling. The oil transfer coupling provides means for transferring the oil pressure e.g. in a cavity in the oil transfer coupling into an axial movement e.g. of the output shaft resulting in a coupling or de-coupling action.

The oil transfer coupling can comprise an activating pressure surface for oil pressurized by the oil pump, the activating pressure surface is oriented to generate an axial relative movement between the output shaft and the epicyclic gearbox. The activating pressure surface is oriented to generate the axial force due to the applied oil pressure. The surface can e.g. be perpendicular to the intended coupling movement or slanted, so that at least a part of the applied oil pressure acts in the intended direction. In particular, the activating pressure surface can be part of a sealing device which can e.g. comprise a cavity for the oil between sealings. This can be a sealing device comprising e.g. two sealing elements with a first sealing element comprising the activating pressure surface having a larger surface than a second surface of the second sealing element.

In a further aspect the oil pump can be drivably connected with a turbine of the gas turbine engine. This implies that the oil pump can only provide oil pressure when the turbine is operating. This provides a fail-safe mode since the recoupling of the shaft and the epicyclic gearbox is only feasible if the turbine is operating.

In addition or alternatively, the oil pump is drivable connected with an external drive.

Furthermore, it is possible that the output shaft and the epicyclic gearbox are coupleable through a helical spline connection. To facilitate an efficient coupling, in particular recoupling action splines of the helical spline connection comprise a tapered section at the rim of the helical spline connection.

To support the coupling action, e.g. by damping vibration the device comprises an additional bearing, in particular located at a planet carrier of the epicyclic gearbox. The additional bearing implies that it is an extra bearing not required for providing a mechanical determined mounting of the shaft mechanism of the gas turbine engine.

The issues are also addressed by a method for coupling, in particular recoupling an output shaft with an epicyclic gearbox in a gas turbine engine, wherein an axial coupling action between the output shaft and the epicyclic gearbox is generated by an oil pump and the coupling action is transmitted through the oil in an oil transfer coupling. The re-coupling can be effected after the output shaft and the epicyclic gearbox were decoupled due to malfunction in the gas turbine engine, in particular a seizure in the epicyclic gearbox.

The issue is also addressed by a gas turbine engine for an aircraft comprising: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft, with a device for coupling, in particular recoupling an output shaft with an epicyclic gearbox in a gas turbine engine, wherein an axial coupling action between the output shaft and the epicyclic gearbox is generatable through an oil pump and transmitted through an oil transfer coupling.

The advantage associated with this invention is the prevention of fan locking due to power gearbox failure and subsequent seizure. Depending on the diameter of the fan, a locked fan may make an aircraft uncontrollable. An aircraft where this is not the case, a locked fan will increase drag, thus reducing the distance the aircraft can fly in this failure condition.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor and a second core shaft connecting the second turbine to the second compressor. The second turbine, second compressor and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds). The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 N kg⁻¹s, 105 N kg⁻¹s, 100 N kg⁻¹s, 95 N kg⁻¹s, 90 N kg⁻¹s, 85 N kg⁻¹s or 80 N kg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160 kN, 170 kN, 180 kN, 190 kN, 200 kN, 250 kN, 300 kN, 350 kN, 400 kN, 450 kN, 500 kN, or 550 kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding. The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500m to 11500 m, for example in the range of from 10600 m to 11400 m, for example in the range of from 10700 m (around 35000 ft) to 11300 m, for example in the range of from 10800 m to 11200 m, for example in the range of from 10900m to 11100 m, for example on the order of 11000 m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic sectional view of an embodiment of a device for coupling an output shaft with a planetary gearbox;
Figure 5 is a sectional view of a further embodiment of a device for coupling an output shaft with a planetary gearbox in a first working position;
Figure 6 is a sectional view of the embodiment shown in figure 5 in a second working position;
Figure 7 is a perspective view of an oil transfer coupling in the embodiment shown in figures 5 and 6:
Figure 8 is a perspective view of helical spline connection in the embodiment shown in figures 5 and 6:
Figure 9 is a sectional view of an embodiment of a device for coupling an output shaft with a planetary gear drive.

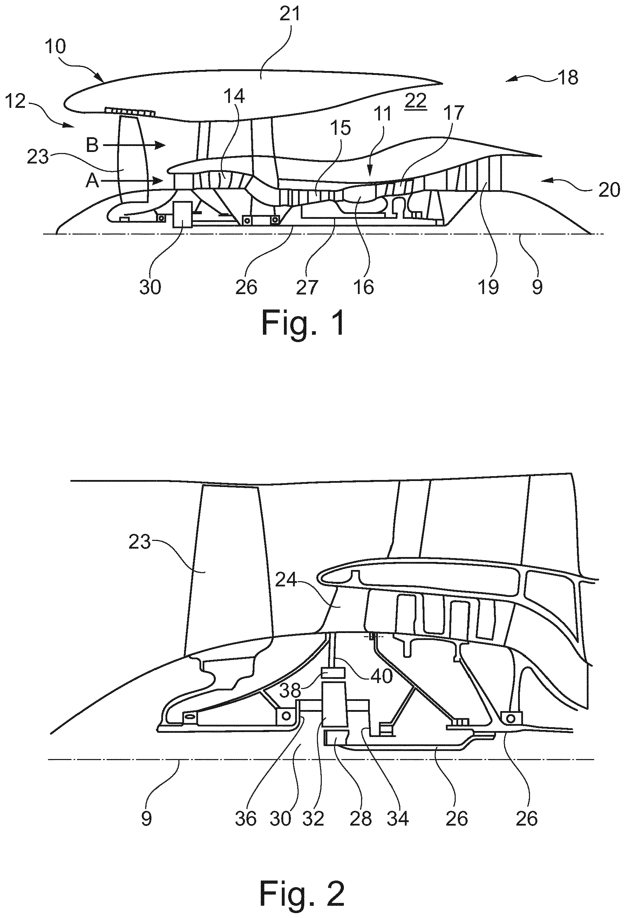

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

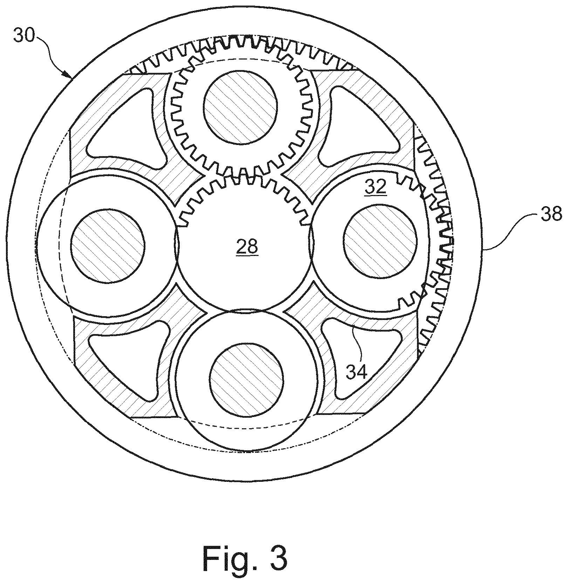

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary gearbox 30, (i.e. a special case of an epicyclic gearbox) generally comprise at least three planet gears 32.

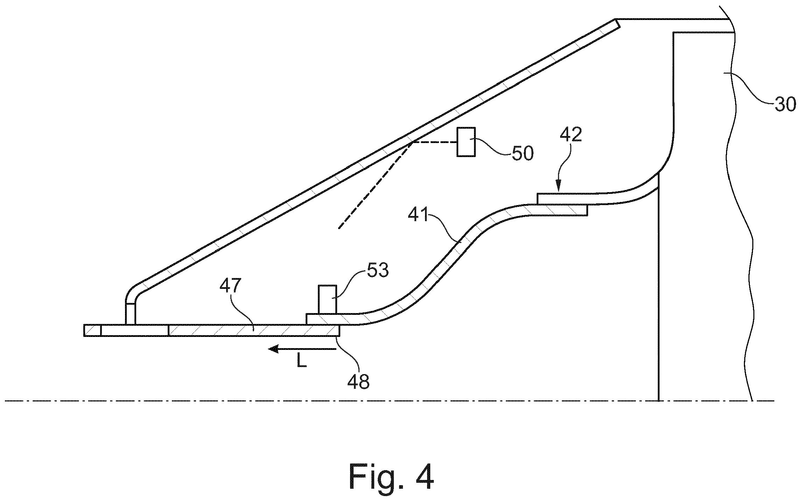

The epicyclic gearbox 30 illustrated by way of example in Figures 2 and 3 is of the planetary type, in that the planet carrier 34 is coupled to an output shaft 41 (see Figure 4) via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft 41 and the fixed structure 24) may have any desired degree of stiffness or flexibility. By way of further example, any suitable arrangement of the bearings between rotating and stationary parts of the engine (for example between the input and output shafts 41 from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of epicyclic gearbox styles (for example star or planetary), support structures, input shaft and output shaft 41 arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In Figure 4 a schematic sectional view is shown of an embodiment for a device for coupling, in particular the recoupling an output shaft 41 with an epicyclic gearbox 30 in a gas turbine engine 10. Figure 4 only shows a part of the output side of the planetary gearbox 30 and its output shaft 41.

A helical spline connection 42 connects the output shaft 41 with the planetary gearbox 30. At the other end of the output shaft 41 a straight spline connection 48 connects it with a fan shaft 47. The output shaft 41 has a varying diameter. The helical spline connection 42 is typically lubricated (not shown in Figure 4 for the sake of simplicity).

Axial coupling action C (indicated by an arrow) between the output shaft 41 and the planetary gearbox 30 is generatable through an oil pump 50 (only shown schematically in Fig. 4) and transmitted through an oil transfer coupling 53. The oil pressure is provided by a main engine oil pump which is typically driven by an accessory gearbox (not shown in Figure 4). The oil pump 50 can e.g. be riven by the accessory gear box, which in this embodiment is driven by the high pressure turbine shaft. A main oil tank provides the oil which is pumped into the gearbox 30 cavity and the cavity 54 in particular. The oil pump 54 can also provide oil to other consumers in the engine 10, in particular other consumers coupled to the gearbox 30.

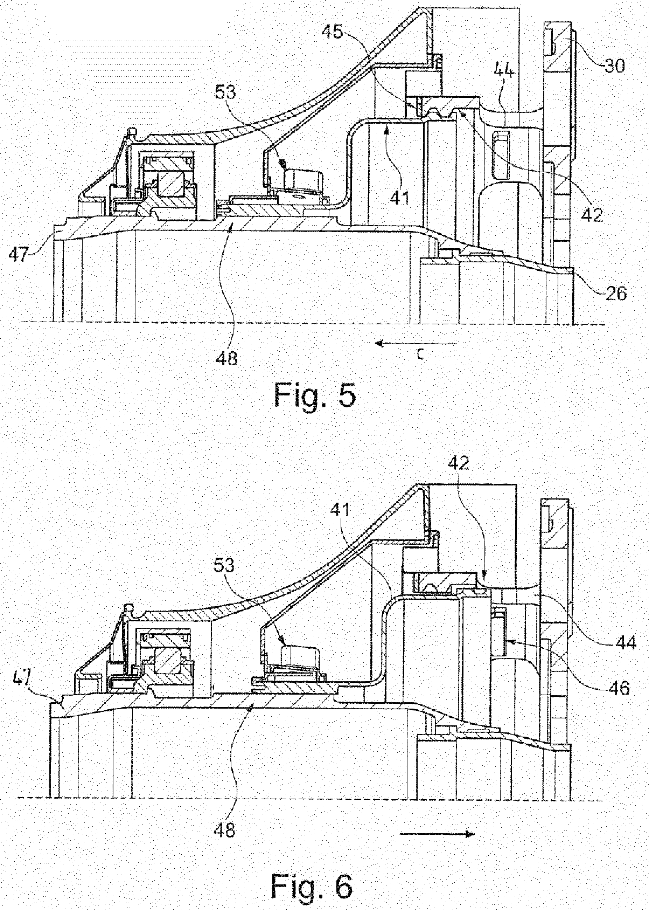

The oil transfer coupling 53 can be moved by applying oil pressure for coupling (as shown in Figures 4 and 5). Therefore, the oil pressure can be used to re-couple the output shaft if it is fully disengaged. If the shaft is partially or fully engaged, the helical splines connection 42 will generate the axial load required to achieve and maintain full engagement. The decoupling would require a reversal of the direction of torque. Such a reversal results when the airstream rather than the turbine drives the fan 23, or should the gearbox 30 seize and momentum drive the fan 23.

In Figures 5 to 9 different operating positions and embodiments are shown in detail.

Figures 5 and 6 show one embodiment in different positions.

Figure 5 shows the normal operating configuration on the output side of the planetary gearbox 30 a gas turbine engine 10.

On the right hand side of Figure 5 the output side of the planetary gearbox 30 is shown. An output element 44 of the planetary gearbox 30 is connected to the planet carrier 34 (not shown in detail in Figure 5).

During normal operation, torque is applied by the planetary gearbox 30 via a helical spline connection 42 at the output element 44 to the output shaft 41. The output shaft 41 then drives the fan shaft 47 to drive the propulsive fan 23 (Figure 1 or 2). The output shaft 41 and the fan shaft 47 are connected via a standard spline connection 48.

The helical spline connection 42 produces as a result of this torque an axial force along the rotational axis 9 of the gas turbine engine 10. This axial force acts to push the output shaft 41 forward (to the left, indicated by an arrow). Actual motion is prevented by an operating stop 45.

Pressure from the main oil system (not shown here), supplied via the oil transfer coupling 53, also generates an axial load on the output shaft 41. This load is not required however to maintain engagement as long as the output shaft 41 is driven by the planetary gearbox 30.

Figure 6 shows the embodiment shown in Figure 5 in a decoupled configuration. In order for this configuration to be achieved, the planetary gearbox 30 must stop delivering torque to the output shaft 41. Torque in opposite direction from the normal operating torque must be applied via the standard spline connection 48 to the output shaft 41. Such a torque would be experienced during in-flight e.g. in windmilling. Under this torque, the helical spline connection 42 produces a force along the axis of the engine. This force acts to push the output shaft 41 rearward (to the right, indicated by an arrow) until the helical spline connection 42 become disengaged. A decouple stop 46 ensures that the standard spline connection 48 remains engaged in this configuration. In this configuration, the propulsive fan 23 and the output shaft 41 are free to rotate independently of the planetary gearbox 30.

Failure to deliver torque to the propulsive fan 23 will result in an gas turbine engine 10 shutdown due to engine overspeed protection activation, the sensing of excessive vibration, or some other means.

In order to return to the normal operating configuration, i.e. a recoupling from a decoupled configuration, two things must happen.

First, torque must be applied to the planetary gearbox 30 input exceeding the negative torque being applied to the output shaft 41.

Second, the main engine oil system must supply pressure to the oil transfer coupling.

Under these conditions, pressure applied by the main engine oil system will act to move the output shaft forward (to the left) until the ends of the helical spline connection 42 become engaged. The axial force generated on the output shaft 41 by the helical spline connection 42 then also acts to bring the helical spline connection 42 into full engagement as shown in Figure 5. This is the axial coupling action C shown in Figure 5.

This process will also occur on engine start up should the invention be brought into the de-coupled configuration by ground windmilling, maintenance activity, or some other means.

Therefore, the recoupling of the output shaft 41 with a planetary gearbox 30 is effected by an axial coupling action C between the output shaft 41 and the planetary gearbox 30 generatable through an oil pump 50 and transmitted through an oil transfer coupling 53 (see Figure 4).

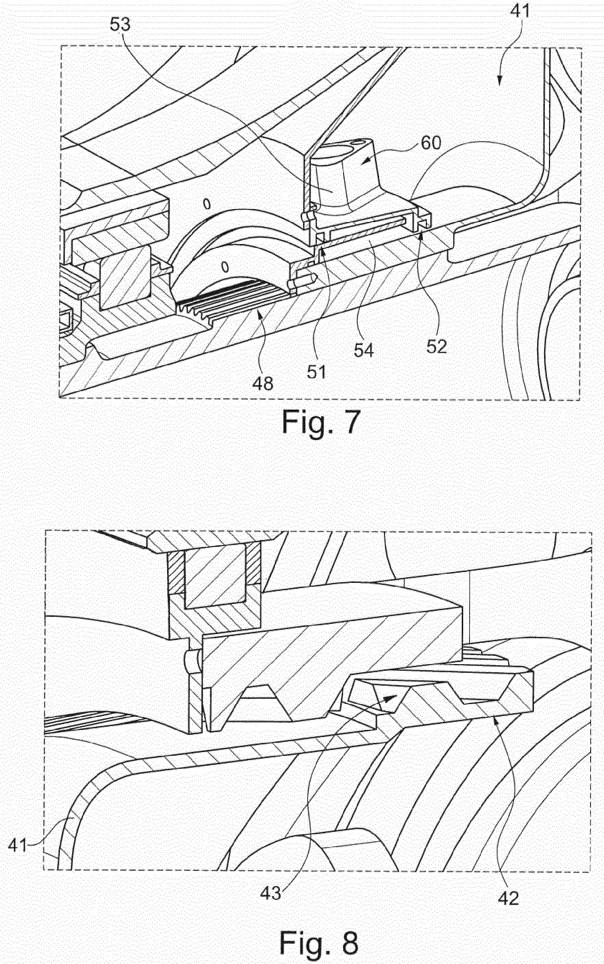

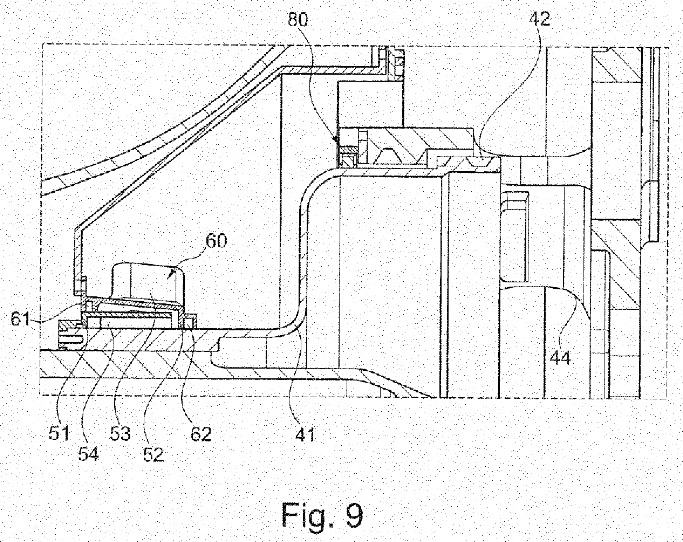

Figure 7 shows details of the oil transfer coupling 53 in the previous embodiment. The oil transfer coupling 53 is e.g. a sealing device 60 (see Figure 9).

It comprises a cavity 54 which axially is limited by surfaces 51, 52. The first surface, axially in front (i.e. on the left hand side in Figure 7) is an activating pressure surface 51 for oil in the cavity 54 pressurized by the oil pump 50 (not shown here). The activating pressure surface 51 has an annular shape and is oriented to generate an axial relative movement between the output shaft 41 and the planetary gearbox 30. The surfaces 51, 52 are formed in part by ring-like sealing elements 61, 62 best seen in Figure 9.

The second surface 52 is located axially towards the rear. The oil transfer coupling 53 implements differing seal diameters with the result that the areas of the surfaces 51, 52 are different. Therefore, oil pressure in the cavity 54 from the main engine oil system produces an axial load on the output shaft 41.

Any pressure in the main engine oil system will act to bring the end faces of the helical spline connection 42 into contact with the de-coupled configuration. Such oil pressure may be generated by windmilling loads on the high pressure compressor and turbine, which will apply torque to the high pressure shaft and, via the radial drive shaft to the accessory gearbox.

In order to minimize damage to the splines under such conditions, a taper is included at the mating faces, i.e. the rim 43 of both the male and female helical splines in the helical spline connection 42. Such a taper is shown in Figure 8.

On applications where the output shaft 41 is subject to significant bending loads, an additional bearing 80 can be implemented, in particular around the output shaft 41, relatively close to the connection to the planetary gearbox 30 as shown in Figure 9. The additional bearing 80 would see no rotation of the inner race relative to the outer race during normal operation. Once decoupled, the inner race will begin rotating relative to the outer race. The additional bearing 80 will also allow the output shaft 41 to transfer radial loads.

Figure 9 also shows the cavity 54 and the different diameters of the surfaces 51, 52.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

### List of reference numbers

- 9: principal rotational axis
- 10: gas turbine engine
- 11: engine core
- 12: air intake
- 14: low-pressure compressor
- 15: high-pressure compressor
- 16: combustion equipment
- 17: high-pressure turbine
- 18: bypass exhaust nozzle
- 19: low-pressure turbine
- 20: core exhaust nozzle
- 21: nacelle
- 22: bypass duct
- 23: propulsive fan
- 24: stationary support structure
- 26: shaft
- 27: interconnecting shaft
- 28: sun gear
- 30: epicyclic gearbox, planetary gearbox
- 32: planet gears
- 34: planet carrier
- 36: linkages
- 38: ring gear
- 40: linkages
- 41: output shaft of epicyclic / planetary gearbox
- 42: helical spline connection between output shaft and planetary gearbox
- 43: rim of splines
- 44: output element planetary gearbox
- 45: operating stop
- 46: decouple stop
- 47: fan shaft
- 48: standard spline connection
- 48: alternative stop

- 50: oil pump
- 51: activating pressure surface
- 52: second surface
- 53: oil transfer coupling
- 54: cavity

- 60: sealing device
- 61: first sealing element
- 62: second sealing element

- 70: external drive

- 80: additional bearing

- A: core airflow
- B: bypass airflow
- C: Coupling action

## Claims

1. Device for coupling, in particular the recoupling an output shaft (41) with an epicyclic gearbox, in particular a planetary gearbox (30) in a gas turbine engine (10), wherein an axial coupling action (C) between the output shaft (41) and the epicyclic gearbox (30) is generatable through an oil pump (50) and transmitted through an oil transfer coupling (53).

2. Device according to claim 1, wherein the oil transfer coupling (53) comprises an activating pressure surface (51) for oil pressurized by the oil pump (50), the activating pressure surface (51) oriented to generate an axial relative movement between the output shaft (41) and the epicyclic gearbox (30).

3. Device according to claim 2, wherein the activating pressure surface (51) is part of a sealing device (60).

4. Device according to claim 3, wherein the sealing device (60) comprises two sealing elements (61, 62), with a first sealing element (61) comprising the activating pressure surface (51) having a larger surface than a second surface (52) of the second sealing element (62).

5. Device according to at least one of the preceding claims, wherein the oil pump (50) is drivably connected with a turbine (17, 19) of the gas turbine engine (10).

6. Device according to at least one of the preceding claims, wherein the oil pump (50) is drivable connected with an external drive (70).

7. Device according to at least one of the preceding claims, wherein the output shaft (41) and the epicyclic gearbox (30) are coupleable through a helical spline connection (42).

8. Device according to claim 7, wherein splines of the helical spline connection (42) comprise a tapered section at the rim (43) of the helical spline connection (42)

9. Device according to at least one of the preceding claims, with an additional bearing (80), in particular at a planet carrier (34) of the epicyclic gearbox (30).

10. Method for coupling, in particular recoupling an output shaft (41) with an epicyclic gearbox, in particular a planetary gearbox (30) in a gas turbine engine (10), wherein an axial coupling action (C) between the output shaft (41) and the epicyclic gearbox (30) is generated by an oil pump (50) and the coupling action (C) is transmitted through the oil in an oil transfer coupling (53).

11. Method according to claim 10, wherein the re-coupling is effected after the output shaft (41) and the epicyclic gearbox (30) were decoupled due to malfunction in the gas turbine engine (10), in particular a seizure in the epicyclic gearbox (30).

12. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
an epicyclic gearbox (30) that receives an input from the core shaft (26) and outputs drive to the fan (23) so as to drive the fan (23) at a lower rotational speed than the core shaft (26), with a device for coupling, in particular recoupling an output shaft (41) with an epicyclic gearbox (30) in a gas turbine engine (10), wherein an axial coupling action (C) between the output shaft (41) and the epicyclic gearbox (30) is generatable through an oil pump (50) and transmitted through an oil transfer coupling (53).
